# EUROPEAN PATENT SPECIFICATION

(11) **EP 2 687 364 B1**
(45) Date of publication and mention of the grant of the patent: **16.09.2015**
(21) Application number: 13177049.7
(22) Date of filing: 18.07.2013
(51) Int. Cl.: B32B 9/00

(54) **Composite conductive sheet, fabricating method and application thereof**
Zusammengesetztes leitfähiges Blatt, Herstellungsverfahren und Verwendung davon
Feuille conductrice composite, procédé de fabrication et son application

(30) Priority: 19.07.2012 CN 201210251285
(43) Date of publication of application: 22.01.2014
(73) Proprietor: AVIC Composites Company Limited, Beijing 101300 (CN); AVIC Beijing Institute of Aeronautical Materials, 100095 Beijing (CN)
(72) Inventor: Yi, Xiaosu, 100095 BEIJING (CN); Guo, Miaocai, 100095 BEIJING (CN); Liu, Gang, 100095 BEIJING (CN); Zhao, Wenming, 100095 BEIJING (CN); Liu, Lipeng, 100095 BEIJING (CN); Cui, Haichao, 100095 BEIJING (CN)
(74) Representative: Eisenführ Speiser

(56) References cited:
- US-A1- 2006 194 037
- US-A1- 2010 104 851

## Description

### FIELD

The present disclosure relates to a composite conductive sheet, a composite material having the composite conductive sheet, and a method of fabricating the composite conductive sheet.

### BACKGROUND

A growing number of continuous carbon fiber reinforced resin matrix laminated composite materials have been used as structural materials for modem aircrafts. Typical continuous carbon fiber reinforced composite material includes an insulating matrix resin and continuous carbon fiber layers. The insulating matrix resin is filled between the continuous carbon fiber layers, which leads to a higher resistivity in both a thickness direction and an in-plane direction perpendicular to fiber direction of the composite material. In this case, when the aircraft is struck by lightning, it is difficult to remove charges from the composite material, therefore there is a risk that the composite material might be damaged or even burned by a large current generated due to the lightning strike. There is a conventional anti-lightning method for the composite material by covering the surface of the composite material directly with a conductive layer such as metal mesh, metal strip, and etc. In recent years, popular methods that are extensively covered in patents and literatures include adding hybrid conductive materials such as carbon nanotube paper, carbon fiber or carbon nanotube to the composite material, or forming a surface layer with a nano conductive composite structure of the hybrid conductive materials. For example, Chinese patent CN102001448A relates to an anti-lightning surface film for aircraft component. The surface film includes a substrate and conductive carbon nanotubes grown on the substrate. PCT publication WO2008048705 proposed a conductive low-density polymer film dispersed with nanoparticle serving as a lightning strike protection layer. PCT publication WO2005032812 proposed using a metal foil and a polymer composite film layer underlying the metal foil as the anti-lightning surface conductive layer. US patent application US2009140098 proposed a method of adding carbon nanotubes to a matrix resin in composite material to improve conductivity.

It can be seen from the above literatures that, for the purpose of improving electrical conduction performance, most of the above methods use metal conductive layer as the outer layer of the composite material, and some methods use fillers comprising conductive carbon nanotube paper, carbon fiber, carbon nanotube and so on to improve the interlayer conductivity of the composite material. However, the metal additive such as the metal conductive layer increases overall weight of the final composite material, and many components in the aircraft can not be applied with metal additive for anti-lightning purposes due to their complex structure. In addition, the metal additive applied in the outer layer of the composite material does not improve resistance to lamination damage upon impact within the composite material. Furthermore, the interlayer addition of carbon nano materials suffers insufficient conductivity due to insufficient conductivity of carbon nano materials, which is also combined with dispersion difficulty of the filler material. Such poor dispersion will lead to deterioration of the resistance to lamination damage upon impact of the composite material. As a result, it demands development of a structural composite material with good anti-lightning and high conductivity as a novel aviation material.

Furthermore, a composite material with continuous carbon fiber reinforced resin matrix laminated structure is usually sensitive to low velocity impact and prone to internal lamination damage upon impact, whereby the compression strength of the composite material is significantly reduced. The primary method for improving the resistance of lamination damage upon impact is by improving interlayer fracture toughness of the composite material. Therefore, it also demands developing a method of toughening the composite material with continuous carbon fiber reinforced resin matrix laminated structure.

There are various methods of toughening the composite material, for example by toughening thermosetting matrix resin directly with high flexible rubber or thermoplastic polymer. But such approach might lower heat resistance and rigidity or deteriorate workability. A further method includes introducing flexible structure between the layers of laminated composite material, which improves the resistance to lamination damage upon impact while maintaining the workability and other mechanical properties of the composite material. The typical examples include inserting separate pure thermoplastic resin layer or thermosetting adhesive layer with high toughness between the layers as well as a so-called "ex-situ" toughening technology (referring to Chinese patent CN101220561 and Chinese patent application CN101760965A) developed therefrom, for example by inserting porous thermoplastic thin film. There are also other technologies to significantly improve the interlayer fracture toughness of the composite material by introducing toughening particles, rigid interposing structure or fibers with high toughness between the layers, for example by inserting nylon non-woven cloth or fabric of thermoplastic resin fibers (i.e. thin fabric woven by thermoplastic resin fibers). Although such technology of introducing toughening structure between the layers improves the toughness of the composite material, it also somewhat increases the interspace filled with resin between the carbon fiber layers. As a result, the relative high interlayer resistance becomes even higher and the anti-lightning performance of the composite material deteriorates accordingly.

US patent application publication No. 20060194037 entitled "Flexible breathable polymer film and method for production" discloses a flexible breathable polymer film composite suitable for packaging purposes. The composite includes at least one composite layer made from a binding agent layer of chemically inert inorganic nanoparticles and a lining layer of hydrophilic non-toxic metal oxide particles which are photoctalytically active under short wave light radiation and which have an anti-bacterial and self-cleaning effect.

US patent application publication No. 20100104851 entitled "Optical film and method of making the same" discloses a low reflective, anti-static and anti-fouling optical film and a forming method thereof. The forming method includes mixing an alkoxy silane, a fluoride-modified alkoy silane, a conductive material and a pores formation agent to form a coating composition..

### SUMMARY

According to one aspect of the disclosure, a composite conductive sheet is provided. The composite conductive sheet comprises a porous carrier with low surface density and conductive medium uniformly attached on the carrier. The porous carrier with low surface density is selected from porous fabric, non-woven cloth, and polymer film, and has a thickness of 5 µm to 80 µm and a surface density of 5 g/m² to 30 g/m². The conductive medium is selected from silver nano-wire, or a mixture of the silver nano-wire and at least one material selected from a group consisting of carbon nanotube, graphene and conductive microfiber.

In one example, the porous non-woven cloth is selected from polymer non-woven cloth or non-polymer non-woven cloth.

In one example, the polymer non-woven cloth is selected from nylon, polyaryletherketone, polyimide, polyetherimide, polyether sulphone, or polyether-ether-ketone.

In one example, the non-polymer non-woven cloth is selected from carbon fiber non-woven cloth, carbon nanotube non-woven cloth or plant fiber non-woven cloth.

According to another aspect of the disclosure, a method of fabricating the composite conductive sheet described as above is provided. The method comprises following steps of: (1) dispersing the conductive medium in a solvent not dissolving the carrier and not damaging the conductive medium so as to form a dispersion, the conductive medium has a concentration of 2 mg/mL to 18 mg/mL in the dispersion; (2) dipping the carrier into the dispersion, or spraying the dispersion onto the carrier, or allowing the dispersion to percolate through the carrier under negative pressure; and (3) drying the carrier.

According to yet another aspect of the disclosure, a composite material is provided. The composite material comprises: a matrix resin, multiple continuous carbon fiber layers disposed in the matrix resin, and the composite conductive sheet as described above disposed between two adjacent carbon fiber layers.

In one example, the carbon fiber of the continuous carbon fiber layers is selected from T300, T800, T700, or CCF300, and the continuous carbon fiber layers is weaved in a manner selected from uni-direction weave, plain weave, twill weave or satin weave.

In one example, the matrix resin is selected from epoxy resin, unsaturated polyester, BOZ resin, BMI resin or polyimide resin.

According to yet another aspect of the disclosure, a method of fabricating the composite material is provided. The method comprises: disposing the composite conductive sheet of claim 1 between two adjacent carbon fiber layers, and stacking the carbon fiber layers and the composite conductive sheet to form a laminate; and curing the laminate in the matrix resin by a molding process.

In one example, the molding process is selected from autoclave molding, RTM, pressurized molding, vacuum aided or vacuum bag molding.

The technical solutions of the present disclosure achieve high toughness, high impact resistance and high conductivity of the continuous fiber laminated composite material. During the fabrication of the composite material, the composite conductive sheet is used as an interposer so as to form a toughened structure of double continuous networks of the composite conductive sheet carrier and continuous carbon fiber layer, and a continuous conductive structure made of conductive medium of the composite conductive sheet. The special one-dimensional small structure of the silver nano-wire in the present disclosure ensures high conductive characteristics even with small amount of attachment, therefore high specific strength, high specific rigidity and high conductivity of the structural composite material can be obtained. The difficulty for dispersing conductive medium such as silver nano-wire can also be avoided by using attachment method. Since the product of the composite material fabricated according to the present disclosure is still in a form of laminated prepeg and laminated plate, the composite material with high conductivity and high toughness can be employed in various applications suitable for convention aviation composite material without making any special changes. The present disclosure also has an advantage of wide applications. For example various small-sized conductive components may be selected as the co-attaching components, various carries such as non-woven cloth, fabric, and porous film having low surface density may be used, and various molding processes and resin systems can be used.

### BRIEF DESCRIPTION OF THE DRAWINGS

The present disclosure will become more fully understood from the detailed description given hereinafter and the accompanying drawings which are given by way of illustration only, and thus are not limitative of the present disclosure.
Fig. 1 is a graph illustrating relationship between the surface density of silver nano-wires and sheet resistance of a composite conductive sheet with a single component of silver nano-wires attached on a nylon non-woven cloth;
Fig. 2 is a SEM image of a nylon non-woven cloth attached with silver nano-wires; and
Fig. 3 is a SEM image of a PAEK film attached with silver nano-wires.

### DETAILED DESCRIPTION OF THE PREFERRED EMBODIMENTS

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the following detailed description.

### First Embodiment

A fabricating method of a composite material according to the first embodiment comprises following steps.

(1-1) Silver nano-wires are dispersed in ethanol, isopropanol, acetone, glycol or water so as to form a dispersion with a silver nano-wire concentration of 5 mg/mL or 10 mg/mL.

(1-2) A polymer non-woven cloth such as a nylon non-woven cloth with a thickness of 53 µm and a surface density of 14 g/m² or a poly(ether-ether-ketone (PEEK) cloth with a thickness of 25 µm and a surface density of 8 g/m² or a polyimide cloth with a thickness of 75 µm and a surface density of 26 g/m² or a polyether sulphone (PES) cloth with a thickness of 15 µm and a surface density of 7 g/m² is dipped into the dispersion with the silver nano-wire concentration of 5 mg/mL or 10 mg/mL prepared in step (1-1), then the cloth is drawn and raised from the dispersion, and the cloth is either air dried or dried by heat. Optionally, the above dipping and drying processes can be repeated by changing the dipping direction of the cloth so as to obtain a conductive polymer non-woven cloth uniformly attached with the nano-wires.

(1-3) The conductive polymer non-woven cloth prepared as above is disposed between two adjacent layers of continuous carbon fiber uni-direction reinforced epoxy resin based prepreg layers, and the above layers are stacked and molded so as to form a toughened and conductive integrated composite preform. For example, the conductive polymer non-woven cloth and the prepreg layer can be stacked alternately or the conductive polymer non-woven cloth can be stacked every few prepreg layers. The carbon fiber can be for example selected from T300, 3K or T800, 12K, and the epoxy resin can be for example 5338 or QY9611 (from Beijing Research Institute of Aviation Engineering).

(1-4) The toughened and conductive integrated composite perform is cured and molded into an epoxy resin based toughened and conductive integrated composite product by a vacuum molding method such as a die pressing or thermal pressing molding for example an autoclave molding method.

Optionally, the conductive polymer non-woven cloth prepared in step (1-2) can be disposed on one or both outer surfaces of the composite product, thus the composite product can not only have overall high conductivity and high toughness, but also have excellent surface conductivity, especially suitable as a composite material for anti-lightning.

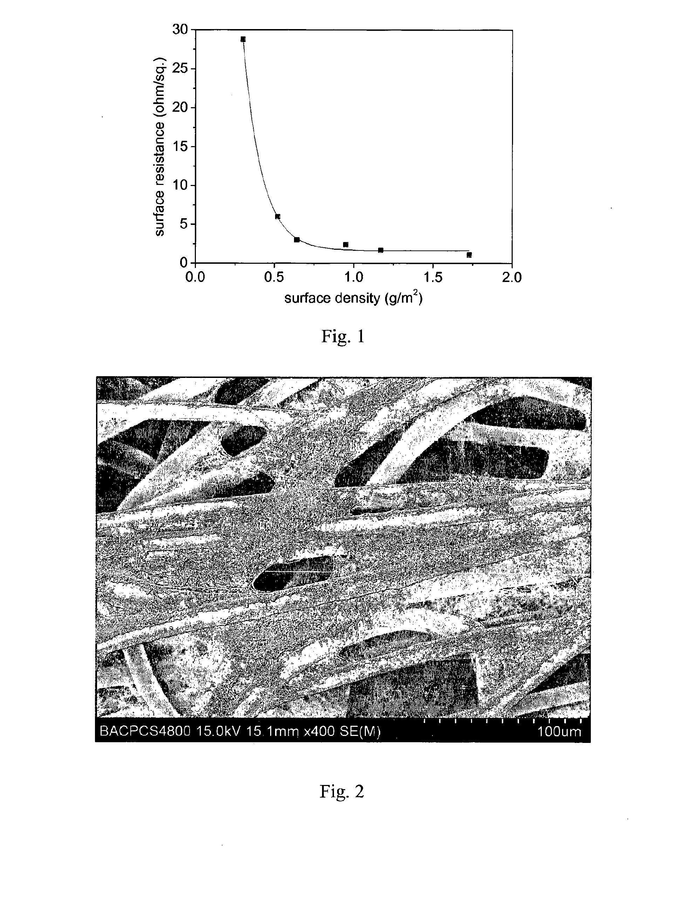

Fig. 1 is a graph illustrating the relationship between the surface density of silver nano-wires and sheet resistance of the conductive nylon non-woven cloth attached with a single component of silver nano-wires. As shown in Fig. 1, even at a very low surface density of the silver nano-wire for example 1 g/m², the sheet resistance of the conductive nylon non-woven cloth can reach 5 Ω/square. In comparison, for the composite product of the same nylon non-woven cloth attached with multi-wall carbon nanotubes having a surface density of 7 g/m², the sheet resistance is still greater than 1000Ω/square.

Fig. 2 is a SEM image of the nylon non-woven cloth attached with silver nano-wires. As shown in Fig. 2, the silver nano wires are distributed uniformly on the nylon non-woven cloth carrier and formed into a continuous conductive network with nylon non-woven cloth serving as a toughening structure.

According to the fabricating method of the present embodiment, a composite conductive sheet with silver nano-wires attached on the nylon non-woven cloth is obtained, and a composite material is prepared by combining the composite conductive sheet and the continuous carbon fiber uni-direction reinforced epoxy resin prepreg layers with the interposing method. The composite conductive sheet comprises the porous carrier of low surface density such as a polymer non-woven cloth and the conductive medium uniformly attached on the carrier. The composite comprises an epoxy resin matrix, a plurality of continuous carbon fiber layers disposed within the epoxy resin matrix and at least one composite conductive sheet disposed between two adjacent continuous carbon fiber layers. Compared with the composite material without the composite conductive sheet, the composite product of the present embodiment can have an I type interlayer fracture toughness improved by 120%, a II type interlayer fracture toughness improved by 230%, a doubled in-plane conductivity along fiber directions, an in-plane conductivity in a direction perpendicular to fiber direction improved by 200 folds, and a conductivity in thickness direction improved by 10 folds, thereby reaching or approaching high conductivities in all three directions (that is, a volume resistivity <=1 Ω•cm). The overall weight increase of the composite material of the present embodiment is very small, such as about 0.5%. In comparison, the conventional composite interposed only with nylon non-woven cloth is substantially insulative in the thickness direction (that is, > 10⁸ Ω•cm with a resistivity decrease by about 10⁷ folds compared with the composite without interposer) and has a similar in-plane conductivities in directions both parallel to fiber directions and perpendicular to the fiber directions as those of the composite material without the interposer.

### Second Embodiment

A fabricating method of a composite material according to the second embodiment comprises following steps.

(2-1) Silver nano-wires are dispersed water or in a mixture of water and at least one material selected from methanol, isopropanol, acetone or ethanol in 1:2 volume ratio so as to form a dispersion with a silver nano-wire concentration of 2 mg/mL or 4 mg/mL.

(2-2) A polymer porous film such as a polyaryletherketone porous film with a porosity of 40% and a thickness of 20 µm and a surface density of 14 g/m² or a polyimide porous film with a thickness of 8 µm and a surface density of 6 g/m² or polyetherimide porous film with a thickness of 25 µm and a surface density of 11 g/m² or a poly(ether-ether-ketone (PEEK) porous film with a thickness of 15 µm and a surface density of 9 g/m² is dipped into the dispersion of silver wires prepared in step (2-1), then is drawn and raised from the dispersion and dried. Optionally, the above dipping and drying processes can be repeated by changing the dipping direction of the film so as to obtain a conductive polymer porous film uniformly attached with the silver nano-wires.

(2-3) The prepared conductive polymer porous film is disposed between two adjacent layers of continuous carbon fiber reinforced fabric made by a weaving method such as satin weave, plain weave, uni-direction weave or a mixed weaving method described as above. For example, the conductive polymer porous film and the above fabrics can be stacked alternately and molded so as to form a toughened and conductive integrated composite preform. The carbon fiber can be for example selected from T700 or 12K.

(2-4) A liquid BOZ resin (Epsilon from Henkel, German) or liquid epoxy resin (3266, from Beijing Research Institute of Aviation Engineering) is injected into the preform and completely impregnated by using a resin transfer molding (RTM) process, and then is molded and cured according to the specified process of the BOZ resin or epoxy resin. At this time, the polyaryletherketone film or PEEK film as a carrier of the conductive polymer porous film is dissolved in the BOZ or 3266 resin during the curing process of curing, and then is subjected to phase separation and phase reversion, and is formed into a toughened BOZ-polyaryletherketone or BOZ-PEEK particle like double continuous structure or a 3266-polyaryletherketone or 3266-PEEK particle double continuous toughened structure while maintaining high conductive structure of the silver nano-wires attached onto the polyaryletherketone film. Eventually a RTM molded BOZ resin based or epoxy resin based toughened and conductive integrated composite material product is obtained. The polyimide porous film or polyetherimide porous film as a carrier of the conductive polymer porous film is not dissolved during curing process and formed as separate interposer between layers for toughening purposes. In this case, a toughened and conductive integrated composite material product is also obtained eventually.

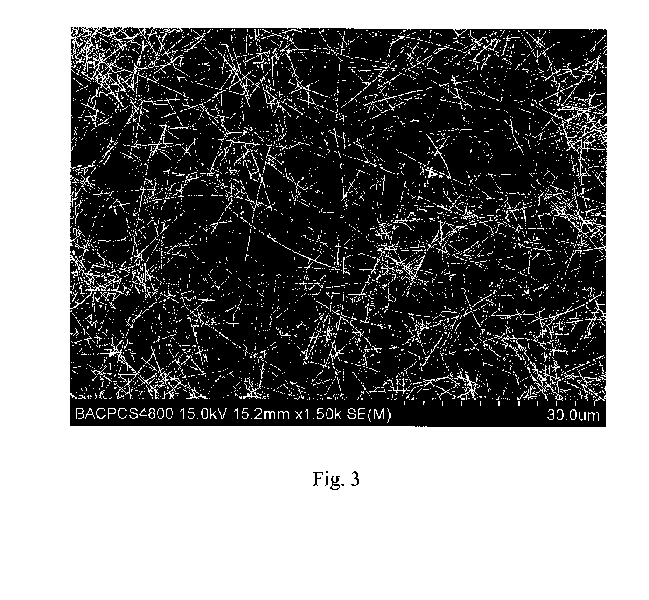

Fig. 3 is a SEM image of the polyaryletherketone film attached with silver nano-wires. As shown in Fig. 3, the silver nano wires are distributed uniformly on the surface of the film, thus forming a continuous conductive network. The polyaryletherketone film itself is subjected to a dissolving, phase separation process during curing process of the composite material so as to form a double continuous toughening structure.

According to the fabricating method of the present embodiment, a composite conductive sheet of polymer porous film attached with silver nano-wires is obtained and a composite material is prepared by combining the composite conductive sheet and the continuous carbon fiber fabrics in a RTM process. The composite conductive sheet comprises a porous carrier with low surface density such as a polymer porous film and the conductive medium uniformly attached on the carrier. Compared with the composite material without the interposer, the composite material of the present embodiment can have an I type interlayer fracture toughness improved by 30%, a II type interlayer fracture toughness improved by 120%, a doubled conductivity along fiber directions in-plane of the composite material, and a conductivity perpendicular to fiber directions in plane of the composite material improved by almost 200 folds. Although the conductivity in thickness direction is slightly lowered, it may be further improved by increasing porosity or pore density. The composite material of the present embodiment has a very small weight addition of about 0.3% to the overall weight. In comparison with the composite material without interposer, the conventional composite material interposed by a polyaryletherketone film without attaching the conductive medium has a conductivity drop (to about 10000Ω·cm) in thickness direction by about 1000 folds, a similar conductivity in directions both parallel to fiber direction and perpendicular to the fiber direction in plane of the composite material, and a II type interlayer fracture toughness improved by only 87% under the same process conditions.

### Third Embodiment

A fabricating method of a composite material according to the third embodiment comprises following steps.

(3-1) Silver nano-wires are dispersed in ethanol so as to form a dispersion with silver nano-wire concentration of 5 mg/mL, carboxyl group modified carbon nanotubes (CNT) are dispersed in water, acetone, or DMF so as to form a dispersion with a concentration of 2 mg/mL or 10 mg/mL.

(3-2) The dispersion with a carboxyl group modified CNT concentration of 2 mg/mL or 10 mg/mL is percolated under negative pressure through a polymer fabric such as nylon fabric with a thickness of 35 µm and a surface density of 14 g/m² or a PEEK fabric with a thickness of 25 µm and a surface density of 11 g/m² or a polyimide fabric with a thickness of 45 µm and a surface density of 18 g/m² for attaching CNT onto the fabrics and is then dried. Afterwards, the fabric attached with CNT is dipped into the ethanol dispersion with silver nano-wire concentration of 5 mg/mL, and then drawn and raised from the dispersion and dried, and a conductive sheet fabric attached with both silver nano-wires and carbon nanotubes is obtained.

(3-3) The prepared conductive sheet fabric with double attachments of CNT and silver nano-wire is disposed between two adjacent layers of continuous carbon fiber reinforced epoxy resin based prepreg layers. The layer of conductive sheet fabric and the continuous carbon fiber reinforced epoxy resin based prepreg layer can be stacked alternatively and molded so as to form a toughened and conductive integrated composite preform. The carbon fiber can be for example selected from T800, 12K or CCF300, 3K, and the epoxy resin can be for example QY9611 (from Beijing Research Institute of Aviation Engineering) or epoxy resin 5228.

(3-4) The toughened and conductive integrated composite preform is cured and molded into a highly conductive and toughened composite product attached with both silver nano-wires and carbon nanotubes by a conventional molding method for example an autoclave molding method.

### Fourth Embodiment

A fabricating method of a composite material according to the fourth embodiment comprises following steps.

(4-1) Silver nano-wires, graphene, carbon nanotubes in are co-dispersed in butyl alcohol, methanol or furan so as to form a dispersion with a silver nano-wire concentration of 4 mg/mL, a graphene concentration of 1 mg/mL, a carbon nanotube concentration of 4 mg/mL, and an overall conductive medium concentration of 9 mg/mL.

(4-2) The dispersion of conductive medium described as above is sprayed onto to a polymer fabric such as a polyimide fiber non-woven cloth with a thickness of 75 µm and a surface density of 26 g/m² , a nano carbon fiber non-woven cloth with a thickness of 28 µm and a surface density of 11 g/m² or a carbon nanotube non-woven cloth with a thickness of 5 µm and a surface density of 5 g/m², so as to obtain a composite conductive sheet attached with silver nano-wires, graphene and carbon nanotubes.

(4-3) The composite conductive sheet prepared as above is disposed between two adjacent layers of carbon fiber fabric, and the composite conductive sheet and the carbon fiber fabric layers are stacked alternatively and molded to form a conductive composite preform. The carbon fiber can be for example selected from T300, 3K.

(4-4) A liquid BMI resin 6421 (product from Beijing Research Institute of Aviation Engineering) or liquid epoxy resin 3266 or liquid BOZ resin (Epsilon from Henkel, German) is injected and molded by a RTM process so as to eventually obtain a carbon fiber reinforced, highly conductive and toughened BMI resin based composite material or epoxy resin based composite material or BOZ resin based composite material.

### Fifth Embodiment

A fabricating method of a composite material according to the fifth embodiment comprises following steps.

(5-1) Silver nano-wires and nickel plated nano carbon fibers are co-dispersed in isopropanol or water so as to form a dispersion with a silver nano-wire concentration of 1 mg/mL, a nickel plated nano carbon fiber concentration of 10 mg/mL, and an overall conductive medium concentration of 11 mg/mL. Then silver nano-wires are dispersed in isopropanol so as to form a dispersion with a silver nano-wire concentration of 5 mg/mL.

(5-2) The dispersion of silver nano-wire and conductive fiber described as above is sprayed onto both surfaces of a polymer porous film such as a polyimide porous film with a thickness of 22 µm and a surface density of 13 g/m² or a polyetherimide porous film with a thickness of 35 µm and a surface density of 15 g/m² and then dried by heating, so as to obtain a conductive polymer porous film, for example, a conductive polyimide porous film or a conductive polyetherimide porous film.

(5-3) The prepared conductive polyimide porous film or polyetherimide porous film is disposed between two adjacent layers of carbon fiber laminated polyimide resin based prepreg layers, and the conductive porous film and the carbon fiber laminated polyimide resin based prepreg layer are stacked alternatively and molded so as to form a conductive preform. The carbon fiber can be for example selected from T700, 12K, and the polyimide resin based prepreg can be for example No. LP 15 (product from Beijing Research Institute of Aviation Engineering).

(5-4) The preform is then molded and cured to form a conductive, toughened and high temperature resistant polyimide resin based composite material according to process specification of the prepreg.

According to present disclosure, a high conductive and toughened composite conductive sheet is first prepared and then disposed between adjacent layers of conventional carbon fiber laminated composite material by an interposing method and then molded to form a composite material with overall high conductivity and high toughness. For example, the conductive sheet and carbon fiber laminate can be stacked alternatively and molded. Compared with the composite material without toughening treatment, the toughness of the composite material according to the present disclosure is significantly improved, meanwhile the performance of the conductive composite material against lightning strike and the resistance to impact are also improved with minimum weight addition to the composite material.

The foregoing detailed description of the invention has been presented for purposes of illustration and description. It is not intended to be exhaustive or to limit the invention to the precise form disclosed. Many modifications and variations are possible in light of the above teaching. The described embodiments were chosen in order to best explain the principles of the invention and its practical application to thereby enable others skilled in the art to best utilize the invention in various embodiments and with various modifications as are suited to the particular use contemplated. It is intended that the scope of the invention be defined by the claims appended hereto.

## Claims

1. Use of a composite conductive sheet in structural material for aircrafts, **characterized in that** the composite conductive sheet comprises of a porous carrier with low surface density and conductive medium uniformly attached on the carrier;
wherein the porous carrier with low surface density is selected from porous fabric, non-woven cloth, and polymer film, and has a thickness of 5 µm to 80 µm and a surface density of 5 g/m² to 30 g/m²; and
wherein the conductive medium is selected from silver nano-wire, or a mixture of the silver nano-wire and at least one material selected from a group consisting of carbon nanotube, graphene and conductive microfiber.

2. The use according to claim 1, **characterized in that** the porous non-woven cloth is selected from polymer non-woven cloth or non-polymer non-woven cloth.

3. The use according to claim 2, **characterized in that** the polymer non-woven cloth is selected from nylon, polyaryletherketone, polyimide, polyetherimide, polyether sulphone, or polyether-ether-ketone.

4. The use according to claim 2, **characterized in that** the non-polymer non-woven cloth is selected from carbon fiber non-woven cloth, carbon nanotube non-woven cloth or plant fiber non-woven cloth.

5. A method of fabricating the composite conductive sheet according to any one of claims 1-4, **characterized in that** the method comprising:
(1) dispersing the conductive medium in a solvent not dissolving the carrier and not damaging the conductive medium so as to form a dispersion, the conductive medium has a concentration of 2 mg/mL to 18 mg/mL in the dispersion;
(2) dipping the carrier into the dispersion, or spraying the dispersion onto the carrier, or allowing the dispersion to percolate through the carrier under negative pressure; and
(3) drying the carrier.

6. Use of a composite structural material for aircrafts, the composite material comprising: a matrix resin, multiple continuous carbon fiber layers disposed in the matrix resin, and the composite conductive sheet according to claim 1 disposed between two adjacent carbon fiber layers.

7. The use according to claim 6, **characterized in that** the carbon fiber of the continuous carbon fiber layers is selected from T300, T800, T700, or CCF300, and the continuous carbon fiber layers is weaved in a manner selected from uni-direction weave, plain weave, twill weave or satin weave.

8. The use according to claim 6 or 7, **characterized in that** the matrix resin is selected from epoxy resin, unsaturated polyester, BOZ resin, BMI resin or polyimide resin.

9. A method of fabricating the composite material according to claim 6, comprising:
disposing the composite conductive sheet of claim 1 between two adjacent carbon fiber layers and stacking the carbon fiber layers and the composite conductive sheet to form a laminate; and
curing the laminate in the matrix resin by a molding process.

10. The method according to claim 9, **characterized in that** the molding process is selected from autoclave molding, RTM, pressurized molding, vacuum aided or vacuum bag molding.

## Patentansprüche

1. Verwendung einer leitfähigen Kompositfolie in Strukturwerkstoff für Luftfahrzeuge, **dadurch gekennzeichnet, dass** die leitfähige Kompositfolie einen porösen Träger mit niedriger Flächendichte und ein leitfähiges Medium, welches gleichförmig am Träger befestigt ist, umfasst;
wobei der poröse Träger mit niedriger Flächendichte gewählt ist aus porösem Stoff, Vliesstoff und Polymerfilm, und eine Dicke von 5 µm bis 80 µm und eine Flächendichte von 5 g/m² bis 30 g/m² hat; und
wobei das leitfähige Medium gewählt ist aus Silber-Nanodrähten oder einer Mischung der Silber-Nanodrähte und mindestens eines Materials gewählt aus einer Gruppe bestehend aus Kohlenstoff-Nanoröhren, Graphen und leitfähiger Mikrofaser.

2. Verwendung nach Anspruch 1, **dadurch gekennzeichnet, dass** der poröse Vliesstoff gewählt ist aus polymerem Vliesstoff oder nicht-polymerem Vliesstoff.

3. Verwendung nach Anspruch 2, **dadurch gekennzeichnet, dass** der polymere Vliesstoff gewählt ist aus Nylon, Polyaryletherketon, Polyimid, Polyetherimid, Polyethersulfon oder Polyetheretherketon.

4. Verwendung nach Anspruch 2, **dadurch gekennzeichnet, dass** der nichtpolymere Vliesstoff gewählt ist aus Kohlefaser-Vliesstoff, Kohlenstoffnanoröhren-Vliesstoff oder Pflanzenfaser-Vliesstoff.

5. Verfahren zur Herstellung der leitfähigen Kompositfolie nach einem der Ansprüche 1-4, **dadurch gekennzeichnet, dass** das Verfahren umfasst:
(1) Dispergieren des leitfähigen Mediums in einem Lösungsmittel ohne den Träger aufzulösen und ohne das leitfähige Medium zu beschädigen, um eine Dispersion zu bilden, das leitfähige Medium hat eine Konzentration von 2 mg/mL bis 18 mg/mL in der Dispersion;
(2) Eintauchen des Trägers in die Dispersion oder Aufsprühen der Dispersion auf den Träger oder Ermöglichen der Dispersion, den Träger unter negativem Druck zu durchdringen; und
(3) Trocknen des Trägers.

6. Verwendung eines Komposit-Strukturwerkstoffs für Luftfahrzeuge, wobei das Kompositmaterial umfasst: ein Matrixharz, mehrere fortlaufende Kohlefaserschichten angeordnet in dem Matrixharz und die leitfähige Kompositfolie nach Anspruch 1, angeordnet zwischen zwei nebeneinanderliegenden Kohlefaserschichten.

7. Verwendung nach Anspruch 6, **dadurch gekennzeichnet, dass** die Kohlefaser der fortlaufenden Kohlefaserschichten gewählt ist aus T300, T800, T700 oder CCF300 und die fortlaufenden Kohlefaser-schichten verwebt sind in einer Art gewählt aus unidirektionalem Gelege, Leinwandbindung, Köperbindung oder Atlasbindung.

8. Verwendung nach Anspruch 6 oder 7, **dadurch gekennzeichnet, dass** das Matrixharz gewählt ist aus Epoxidharz, ungesättigem Polyester, BOZ-Harz, BMI-Harz oder Polyimidharz.

9. Verfahren zur Herstellung des Kompositmaterials nach Anspruch 6, umfassend:
Anordnen der leitfähigen Kompositfolie nach Anspruch 1 zwischen zwei nebeneinanderliegenden Kohlefaserschichten und Stapeln der Kohlefaserschichten und der leitfähigen Kompositfolie, um ein Laminat zu bilden; und
Härten des Laminats im Matrixharz durch einen Formgebungs-prozess.

10. Verfahren nach Anspruch 9, **dadurch gekennzeichnet, dass** der Formgebungsprozess gewählt ist aus Autoklaven-Formen, RTM, Druckformen, vakuumgestütztes oder Vakuumsack-Formen.

## Revendications

1. Utilisation d'une feuille composite conductrice dans du matériau de structure pour aéronefs, **caractérisée par le fait que** la feuille composite conductrice comprend un support poreux de faible densité surfacique et un milieu conducteur fixé uniformément sur ledit support;
ledit support poreux de faible densité surfacique étant choisi parmi un tissu poreux, un non-tissé et un film de polymère et présentant une épaisseur de 5 µm à 80 µm et une densité surfacique de 5 g/m² à 30 g/m²; et
ledit milieu conducteur étant choisi parmi les nanofils d'argent ou un mélange de nanofils d'argent et d'au moins un matériau choisi dans un groupe constitué par les nanotubes de carbone, le graphène et la microfibre conductrice.

2. Utilisation selon la revendication 1, **caractérisée par le fait que** le non-tissé poreux est choisi parmi le non-tissé polymère ou le non tissé non polymère.

3. Utilisation selon la revendication 2, **caractérisée par le fait que** le non-tissé polymère est choisi parmi le nylon, le polyaryléthercétone, le polyimide, le polyétherimide, le polyéthersulfone ou le polyétheréthercétone.

4. Utilisation selon la revendication 2, **caractérisée par le fait que** le non-tissé non polymère est choisi parmi le non-tissé de fibres de carbone, le non-tissé de nanotubes de carbone ou le non-tissé de fibres végétales.

5. Procédé de fabrication de la feuille composite conductrice selon l'une quelconque des revendications 1 à 4, **caractérisé par le fait que** le procédé comprend:
(1) disperser le milieu conducteur dans un solvant sans dissoudre le support et sans endommager le milieu conducteur de manière à former une dispersion, le milieu conducteur a une concentration de 2 mg/mL à 18 mg/mL dans la dispersion;
(2) immerger le support dans la dispersion ou appliquer par pulvérisation la dispersion sur le support ou permettre à la dispersion de pénétrer le support sous pression négative; et
(3) sécher le support.

6. Utilisation d'un matériau composite de structure pour aéronefs, ledit matériau composite comprenant: une résine de matrice, une pluralité de couches de fibres de carbone continues disposées dans la résine de matrice et la feuille composite conductrice selon la revendication 1, disposée entre deux couches de fibres de carbone adjacentes.

7. Utilisation selon la revendication 6, **caractérisée par le fait que** la fibre de carbone des couches de fibres de carbone continues est choisie parmi T300, T800, T700 ou CCF300, et les couches de fibres de carbone continues sont tissées d'une manière choisie parmi le tissage unidirectionnel, l'armure toile, l'armure sergé ou l'armure satin.

8. Utilisation selon la revendication 6 ou 7, **caractérisée par le fait que** la résine de matrice est choisie parmi la résine époxyde, le polyester insaturé, la résine BOZ, la résine BMI ou la résine de polyimide.

9. Procédé de fabrication du matériau composite selon la revendication 6, comprenant:
disposer la feuille composite conductrice selon la revendication 1 entre deux couches de fibres de carbone adjacentes et empiler les couches de fibres de carbone et la feuille composite conductrice pour former un stratifié; et
durcir le stratifié dans la résine de matrice par un processus de moulage.

10. Procédé selon la revendication 9, **caractérisé par le fait que** le processus de moulage est choisi parmi le moulage en autoclave, le moulage par transfert de résine, le moulage sous pression, le moulage assisté par le vide ou au sac sous vide.
